Europäisches Patentamt

European Patent Office

Office européen des brevets

(19)

(11) Veröffentlichungsnummer : **0 071 954**
**B1**

# (12) EUROPÄISCHE PATENTSCHRIFT

(45) Veröffentlichungstag der Patentschrift :
**30.12.86**

(51) Int. Cl.⁴ : **A 01 C   7/04**

(21) Anmeldenummer : **82106990.3**

(22) Anmeldetag : **03.08.82**

(54) **Vorrichtung zum Vereinzeln und Ablegen von körnigem Gut.**

(30) Priorität : **10.08.81 DE 3131620**

(43) Veröffentlichungstag der Anmeldung :
**16.02.83 Patentblatt 83/07**

(45) Bekanntmachung des Hinweises auf die Patenterteilung : **30.12.86 Patentblatt 86/52**

(84) Benannte Vertragsstaaten :
**AT BE CH DE FR GB IT LI NL SE**

(56) Entgegenhaltungen :
**DE-A- 2 847 514**

(73) Patentinhaber : **Karl Becker GMBH & CO K.G. Maschinenfabrik**

**D-3525 Oberweser 1-Gieselwerder (DE)**

(72) Erfinder : **Becker, Reinhard
Am Rottland 22
D-3525 Oberweser 1 (DE)**

(74) Vertreter : **Bischof, Hans-Jochen
Schwalbenstrasse 10 Postfach 2105
D-2808 Syke-Barrien (DE)**

## Beschreibung

Die Erfindung bezieht sich auf eine Vorrichtung zum Vereinzeln und Ablegen von körnigem Gut, insbesondere Saatgut, indem ein Luftstrom in einen Trichter eingeleitet wird, wobei der Trichter zur Aufnahme des körnigen Gutes vorgesehen ist und sein unterer Teil durch trichterförmige Spreizbacken gebildet ist, an deren unterem Ende ein Durchlaß eingebracht ist, der im ungespreizten Zustand kleiner als das kleinste Korn ist (DE-A-2 847 514).

Das untere Trichterende ist durch Spreizbacken gebildet. Diese Spreizbacken besitzen einen Durchlaß am unteren Ausgang, der kleiner als das kleinste Korn ist. Zur Ablage der Körner werden die Spreizbacken geöffnet und geschlossen und zwar abhängig von der Ablagegeschwindigkeit und von der Fahrgeschwindigkeit des ziehenden Fahrzeuges.

Das Prinzip beruht darauf, daß die in den Trichter einströmende Luft zunächst versucht, unten aus dem Durchlaß herauszuströmen. Dieser Durchlaß ist jedoch durch ein Korn größtenteils verschlossen. Somit kann auch nur ein geringer Luftstrom an diesem unteren Korn vorbeistreichen. Dieser geringe Luftstrom verursacht unterhalb dieses einen Kornes einen Unterdruck gegenüber dem größeren im Trichter selbst anstehenden Druck. Damit entsteht für das untere Korn eine nach unten gerichtete Sogwirkung, die es am Trichterausgang festhält. Der im Trichter selbst wirkende Luftstrom wird dagegen, da er nach unten nicht voll entweichen kann, im Trichter umgelenkt und wieder nach oben herausgeführt. Hierbei ist natürlich von wesentlicher Bedeutung, wie der Luftstrom in den Trichter eingeleitet wird.

Die Aufgabe der vorliegenden Erfindung besteht darin, daß der Luftstrom so in den Trichter geleitet wird, daß er einmal alle überzähligen Körner aus dem Trichter herausbläst, und diese in eine solche Schwebehöhe bringt, daß das Öffnen des Spreibackens mit der dadurch bedingten Veränderung hinsichtlich der Luftströmung nur ein Herausfallen des einen unten liegenden Kornes veranlaßt und daß der Spreizbacken bereits wieder geschlossen ist, bevor die übrigen Körner von oben heruntergefallen sind. Um höhere Ablagegeschwindigkeiten zu erzielen, ist es erforderlich, daß der Trichter wieder bis unten voll gefüllt ist, wenn der Spreizbacken geschlossen hat. Das bedeutet aber, daß das Herunterfallen der Körner nach dem Öffnen des Spreizbackens gesteuert werden muß.

Erfindungsgemäß geschieht dieses durch die in Anspruch 1 angegebenen Merkmale.

Der Luftstrom wird senkrecht in den Trichter eingeleitet. Die ständig sich ändernden Strömungsverhältnisse in Abhängigkeit vom Öffnen und Schließen des Spreizbackens bestimmen den weiteren Ablauf des Vereinzelns und Ablegens des Kornes. Hierbei ist noch die Luftstromgeschwindigkeit auf das richtige Maß zu bringen. Es hat sich gezeigt, daß bereits ein kleiner Überdruck im Trichter ausreicht, um die Körner herauszublasen. Die in den Trichter einströmende Luft wird umgeleitet und in Folge der obigen Trichteraufweitung auch nach oben wieder herausgeleitet. Als einziger Widerstand sind hierbei die im Trichter befindlichen Körner anzusehen, diese werden jedoch mit dem Strom nach oben herausgerissen. Die Körner schweben dann oberhalb des unteren Trichterteiles und öffnet jetzt der untere Spreizbacken um einen Winkel, der gerade groß genug ist, um das eine daselbst befindliche Korn herausfallen zu lassen, so tritt eine Änderung der Strömungsverhältnisse ein. Es wird durch die Vergrößerung der Durchlaßöffnung ein wesentlich größerer Anteil des Luftstromes nach unten abgeleitet. Damit ist der im Trichter zuvor nach oben umgelenkte Luftstrom nicht mehr in der Lage, die Körner oberhalb des Trichters in der Schwebe zu halten, diese fallen herunter. Gleichzeitig erfährt das eine abzulegende Korn eine geringe Beschleunigung, die seinen Austritt durch die Trichteröffnung etwas schneller vonstatten gehen läßt. Da aber gleichzeitig die Trichteröffnung vergrößert ist, ist der Beschleunigungseffekt sehr gering und übt keinerlei Nachteile auf die Ablage dieses Kornes aus. Sobald das eine Korn den Trichterausgang passiert hat, wird der Spreizbacken wieder geschlossen und der Vorgang beginnt von neuem. Dadurch, daß der obere Teil des Trichters in der Höhe ein Vielfaches von dem Weg beträgt, den das Einzelkorn in der Backenöffnung zurücklegen muß, ist gewährleistet, daß während des Öffnungsvorganges kein anderes Korn die Backenöffnung erreicht, bevor der Spreizbacken wieder geschlossen hat. Die Schwebehöhen der überschüssigen Körner im Trichter ist bei geschlossenem Backen aber noch höher, da diese tatsächlich aus dem Trichterteil herausgeblasen werden, in dem der Spreizbacken wirksam ist. Im geöffnetem Zustand des Spreizbackens entsteht nur in Folge des größeren Luftaustrittes nach unten für die im Schwebezustand befindlichen Körner eine Sogwirkung, die ihr Herabfallen beschleunigt.

Zur Erzielung höherer Ablagegeschwindigkeiten läßt sich dieses erfindungsgemäß ausnutzen, z. B. durch Einbringen einer mechanischen Sperre, durch die das Herabfallen der Körner vorübergehend, d. h. während der Phase der Öffnung des Spreizbackens, unterbrochen wird.

Anhand von Zeichnungsbeispielen sei die Erfindung näher erläutert:

Figuren 1a und 1b geben perspektivisch die Wirkungsweise des Spreizbackens wieder und

die Figuren 2 bis 5 stellen schematisch die Arbeitsweise von Spreizbacken und Schieber dar.

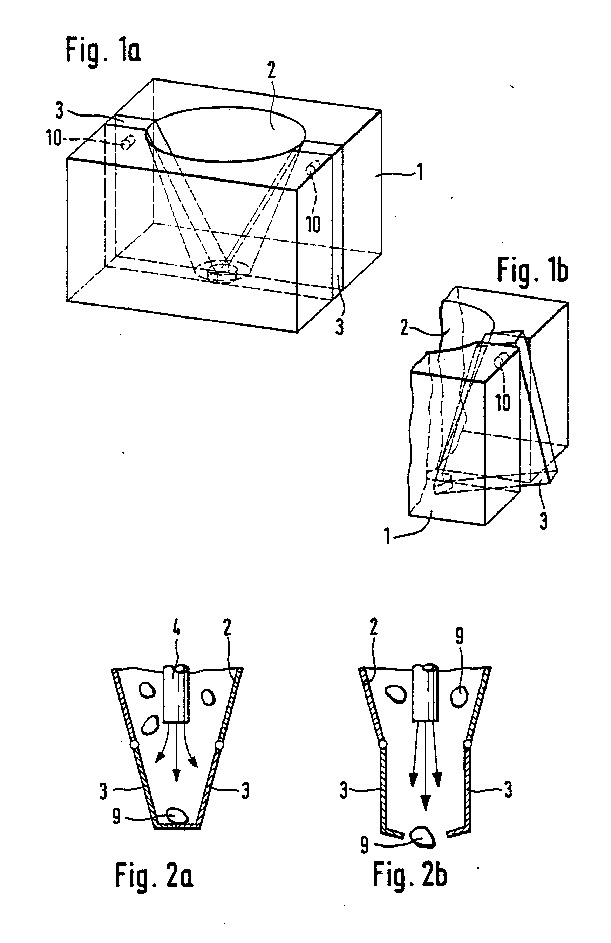

Fig. 1 zeigt das untere Ende des Trichters, nämlich den Spreizbacken selbst. In einem Gehäuse 1 ist der Trichter 2 durchgeführt. Der untere Ausgang des Trichters ist ein Durchlaß, der kleiner ist als das kleinste Korn. Durch diesen Trichter ist ein Schnitt gelegt, in dessen Schnittebene der Spreizbacken 3 wirksam ist. Der Spreizbacken 3 ist so breit ausgeführt, daß er im geöffnetem Zustand einen Spalt im unteren Trichterteil freigibt, der größer ist als das größte Korn. Der Spreizbacken 3 ist um den Drehpunkt 10 drehbar gelagert.

Die Wirkungsweise ist nun folgende :

In den Trichter 3 ragt ein Blasrohr 4, durch dieses Blasrohr wird Luft in den Trichter bis in den unteren Spreizbackenteil eingeblasen. Diese eingeblasene Luft erzeugt im Trichter einen Überdruck und am unteren Ende des Trichters unterhalb des Durchlasses einen leichten Unterdruck. Dadurch wird ein Korn jeweils an der Öffnung festgesaugt, während die anderen durch den Überdruck nach oben geblasen werden. Sie erreichen hierbei eine Schwebehöhe, die außerhalb des Spreizbackenbereiches liegt. Öffnen jetzt die Spreizbacken 3, so wird eine Öffnung freigegeben, die das unten liegende Korn durchfallen läßt. Gleichzeitig verändern sich die Verhältnisse im Innern des Trichters, die in der Schwebe gehaltenen Körner werden heruntergerissen. Der Ausstoß des unteren Kornes wird beschleunigt, da durch das Blasrohr noch Druckluft nach unten austritt. Die Fallhöhe der in Schwebe gehaltenen Körner ist so hoch zu bemessen, daß ihr Weg, den sie nach unten zurücklegen, größer ist als der Weg, den der Spreizbacken zum Öffnen und Schließen benötigt.

Diese Anordnung läßt nur bestimmte Ablegegeschwindigkeiten zu. Diese sind bedingt durch die Fallhöhe der schwebenden Körner. Sollen größere Ablegegeschwindigkeiten gefahren werden, muß die Fallhöhe verringert werden. Hierbei besteht dann die Gefahr, daß bereits Körner das untere Ende des Spreizbackens erreicht haben, ehe dieser wieder ganz geschlossen ist.

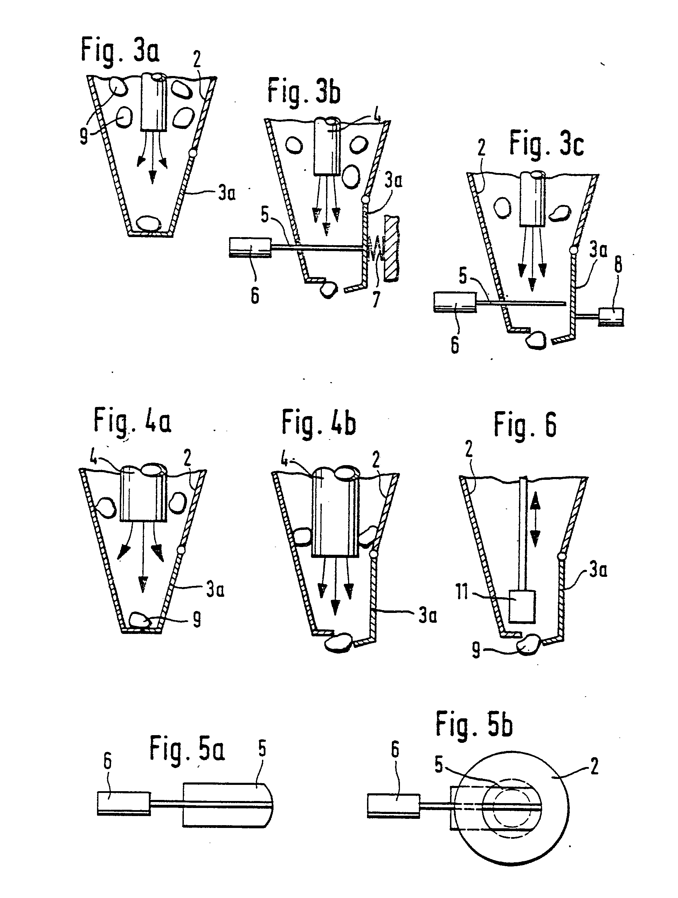

Um diese Fehlbelegungen mit Sicherheit auszuschließen, wird gemäß Fig. 3 nur ein Spreizbacken 3a vorgesehen. Dieser eine Spreizbacken 3a wird durch einen Schieber 5 betätigt, der durch den Trichter hindurchgeführt ist. Dieser Schieber 5 ist gabelförmig ausgeführt oder in Form einer Platte mit entsprechenden Luftdurchtrittsöffnungen. Bei dem Schieber 5 ist wichtig, daß der Abstand der einzelnen Zinken so gewählt ist, daß die Körner nicht hindurchfallen können. Ferner ist der Abstand zwischen den außen liegenden Zinken und der anschließenden Trichterwand ebenfalls so klein zu halten daß auch hier keine Körner durchfallen können. Dieser Schieber ist im Ruhezustand zurückgezogen und zwar so weit zurückgezogen, daß seine Zinkenenden mit der Wandung des Trichters abschließen, d. h. daß die Zinken nicht in den Innenraum des Trichters ragen. In diesem Zustand ist auch der Spreizbacken geschlossen. Die durch die eingeblasene Luft im Schwebezustand gehaltenen Körner befinden sich oberhalb der Schieberebene. Soll jetzt der Spreizbacken 3a betätigt werden, so wird der Schieber 5 mittels eines Antriebes 6 durch den Trichter hindurchgeführt, bis er auf den gegenüberliegenden Spreizbacken trifft und diesen z. B. gegen eine Feder 7 so weit nach außen schiebt, daß die nunmehr entstehende Öffnung das unten liegende Korn herausfallen läßt. Während dieser Phase riegelt der Schieber jedoch den Raum nach oben für die Körner ab, so daß herunterfallende Körner auf dem Schieber liegenbleiben. Wird der Schieber anschließend durch seinen Antrieb 6 zurückgezogen, so schließt der Spreizbacken und der eingefahrene Schieber gibt den Weg für die Körner nach unten frei, die im geschlossenen Zustand des Spreizbackens nunmehr wieder durch den Überdruck an Luft nach oben geschleudert werden, bis auf das eine Korn, das versucht, die Durchgangsbohrung zu schließen. Bei dieser Anordnung kann die Fallhöhe der Körner wesentlich verringert werden, damit ihr Weg nach unten verringert werden und die Ablagegeschwindigkeit gesteigert werden.

Im Bedarfsfall kann das Öffnen und Schließen des Spreizbackens 3a durch einen eigens für ihn vorgesehenen Antrieb 8 geschehen. In diesem Falle läuft der Schieber 5 dem Spreizbacken 3a nur nach ohne ihn selbst zu berühren, wobei der Spaltzwischen Zinkenende und Spreizbacken entsprechend so klein zu halten ist, daß die Körner auch hier nicht durchfallen können.

Die Aufgabe des zuvor erwähnten Schiebers kann auch das Blasrohr 4 selbst übernehmen. Hierzu ist es erforderlich, daß das Blasrohr heb- und senkbar in den Trichter eingebracht ist. In seiner Normalstellung gemäß Fig. 4a ergibt sich zwischen Blasrohrende und Trichterwand ein Spalt, groß genug, um die Körner hindurchfallen zu lassen. Durch das Einblasen der Luft werden die Körner entsprechend wieder nach oben getrieben bis auf eines, das unten die Öffnung verschließt. Senkt man jetzt das Blasrohr 4 ab, und zwar soweit in den Trichter hinein, daß der Spalt zwischen Blasrohrende und Trichterwand kleiner ist als das kleinste Korn, dann wird ein Herabfallen der schwebenden Körner in den unteren Bereich vermieden. Nunmehr kann gleichzeitig der Spreizbacken 3a oder die Spreizbacken 3 geöffnet werden, so daß das unten liegende Korn herausfällt. Wird das Blasrohr 4 wieder nach oben geführt, beginnt der Vorgang wieder von neuem.

Im Bedarfsfall kann ferner ein Auswerfer 11 vorgesehen sein, der den Ausstoß der Körner nach unten bei geöffnetem Spreizbacken vorsieht oder beschleunigt. Dieser Auswerfer 11 kann durch das Blasrohr durchgeführt werden und mit eigenem Antrieb versehen sein oder in den Fällen, in denen das Blasrohr heb- und senkbar angeordnet ist, direkt mit ihm verbunden sein.

Anstatt des Schiebers kann auch ein Stern vorgesehen werden, der seitlich an dem Trichter so angeordnet ist, daß er wie ein Rad in den Trichter hineingedreht wird und dabei rhythmisch über einen Arm von unten nach oben durch den Trichter führt, in dem Maße wie der Spreizbacken öffnet und schließt. Es kann auch der Auswerfer so als Stempel angeordnet werden, daß er das untere Korn im geöffnetem Zustand des Spreizbackens herausdrückt und gleichzeitig in dieser Stellung aber die übrigen Körner daran hindert, den unteren Bereich des Trichters zu erreichen. Die Antriebsform sowohl für die Steuerung des Blasrohres als auch für die Steuerung des Schiebers oder Auswerfers sind beliebig, sie können hydraulischer, pneumatischer oder elektrischer Ansteuerung dienen, auch ist ein mechanischer Nocken vorsehbar. Die Antriebssteuerung wird jedoch zweckmäßig zeitabhängig gemacht, d. h. daß der Öffnungsvorgang des Spreizbackens schnell vollzogen wird, wohingegen sein Schließen zeitlich verzögert wird, um so zu erreichen, daß der Spalt unten etwas länger offen gehalten wird, um die in der Schwebe befindlichen Körner dadurch schneller herunterzureißen. Bei der Anordnung mit einem Schieber wird hierbei der Schieber schneller weggezogen, so daß die Öffnung nach unten auch durch den Schieber mehr freigegeben ist, als das endgültige Schließen des Spreizbackens erfolgt. Selbstverständlich ist diese Steuerung so vorzusehen, daß die Körner das untere Ende des Trichters erst dann erreichen, wenn der Spreizbacken wieder voll geschlossen ist. Dieses läßt sich auch durch eine zusätzliche Bohrung erzielen, die mit Hilfe einer Klappensteuerung rhythmisch geöffnet und geschlossen wird und die beim Schließen des Spreizbackens verzögert aufmacht.

**Patentansprüche**

1. Vorrichtung zum Vereinzeln und Ablegen von körnigem Gut, insbesondere Saatgut, indem ein Luftstrom in einen Trichter (2) geleitet wird, wobei der Trichter zur Aufnahme des körnigen Gutes vorgesehen ist und sein unterer Teil durch trichterförmige Spreizbacken gebildet ist, an deren unterem Ende ein Durchlaß eingebracht ist, der im ungespreizten Zustand kleiner als das kleinste Korn ist, dadurch gekennzeichnet, daß in dem Trichter ein Blasrohr (4) angeordnet ist, das den Luftstrom in den unteren Teil der Spreizbacken (3) leitet.

2. Vorrichtung nach Anspruch 1 dadurch gekennzeichnet, daß das Blasrohr (4) heb- und senkbar angeordnet ist und im abgesenkten Zustand nur einen Spalt zwischen Rohrende und Trichterwand offen läßt, der kleiner als das kleinste Korn ist.

3. Vorrichtung nach Anspruch 1 dadurch gekennzeichnet, daß das Trichterende zwei Spreizbacken (3) besitzt, die nur einen Ausschnitt des Trichters (2) bilden und deren Breite größer als das größte Korn ist.

4. Vorrichtung nach Anspruch 1 dadurch gekennzeichnet, daß nur ein Spreizbacken (3a) vorgesehen ist.

5. Vorrichtung nach Anspruch 1 und 4 dadurch gekennzeichnet, daß der Spreizbacken (3a) von einem Schieber (5) betätigt ist.

6. Vorrichtung nach den Ansprüchen 1, 4 und 5 dadurch gekennzeichnet, daß der Schieber (5) gabelförmig ausgebildet ist.

7. Vorrichtung nach den Ansprüchen 1, 4, 5 und 6 dadurch gekennzeichnet, daß die Gabelzinken des Schiebers durch die eine Trichterwand gegenüber des Spreizbackens (3a) geführt sind.

8. Vorrichtung nach Anspruch 1 und 4 dadurch gekennzeichnet, daß der Schieber (5) so angeordnet ist, daß ein Spalt kleiner als das kleinste Korn zwischen dem Ende der Schieberzinken und den Spreizbacken verbleibt.

9. Vorrichtung nach Anspruch 1 und 5 dadurch gekennzeichnet, daß der Abstand der Zinken des Schiebers kleiner als das kleinste Korn ist und daß die Zinken im Trichter so geführt sind, daß zwischen den außen liegenden Zinken und der Trichterwandung ein Spalt kleiner als das kleinste Korn verbleibt.

10. Vorrichtung nach Anspruch 1 und 5 dadurch gekennzeichnet, daß der Schieber plattenförmig mit Durchbrücken zur Luftdurchsetzung ausgebildet ist.

11. Vorrichtung nach Anspruch 1 und 5 dadurch gekennzeichnet, daß der Schieber von einem Antrieb angesteuert wird, der hydraulisch, pneumatisch oder elektrisch ausgebildet ist.

12. Vorrichtung nach den Ansprüchen 1, 4 und 8 dadurch gekennzeichnet, daß der Spreizbacken einen eigenen Antrieb (8) besitzt.

13. Vorrichtung nach den Ansprüchen 1, 4 und 8 dadurch gekennzeichnet, daß das Öffnen und Schließen des Spreizbackens zeitabhängig gesteuert ist.

14. Vorrichtung nach Anspruch 1, dadurch gekennzeichnet, daß in den unteren Trichterraum eine mechanisch wirkende Einrichtung angeordnet ist, die in Abhängigkeit vom Öffnen und Schließen des Spreizbackens gesteuert ist und bei geöffneten Spreizbacken den Trichterraum für die Dauer der Öffnungszeit für herabfallende Körner abriegelt.

**Claims**

1. A device for separating and piling granular material, especially seeds, by passing an air stream into a funnel (2) which is provided to receive said granular material and whose lower section is formed by funnel-shaped spreading jaws whose lower end is provided with a passage which, in non-spread condition, is narrower than the smallest grain, characterized in that a blower pipe (4) is arranged in said funnel to pass the air stream into the lower part of said spreading jaws (3).

2. A device according to Claim 1, characterized in that said blower pipe (4) is arranged for upward and downward movement, and that, in the lowered condition, only a gap is left between the end of said pipe and the wall of said funnel, which is narrower than the smallest grain.

3. A device according to Claim 1, characterized in that the end of said funnel is provided with two spreading jaws (3) forming only a section of said funnel (2) and having a width exceeding the size of the largest grain.

4. A device according to Claim 1, characterized in that only a single spreading jaw (3a) is provided.

5. A device according to Claims 1 and 4, characterized in that said spreading jaw (3a) is actuated by a slide element (5).

6. A device according to Claims 1, 4 and 5, characterized in that said sliding element (5) is of a forked configuration.

7. A device according to Claims 1, 4, 5 and 6, characterized in that the fork tines of said sliding element are passed through one wall segment of said funnel, opposite said spreading jaw (3a).

8. A device according to Claims 1 and 4, characterized in that said sliding element (5) is so arranged that a gap remains between the end of the fork tines of said sliding element and said spreading jaws, said gap being narrower than the smallest grain.

9. A device according to Claims 1 and 5, characterized in that the distance between the fork tines of said sliding element is narrower than the smallest grain, and that the fork tines are guided in said funnel in a way that a gap smaller than the smallest grain remains between the fork tines at the outside and the wall of said funnel.

10. A device according to Claims 1 and 5, characterized in that said sliding element has the configuration of a plate having openings for the passage of air.

11. A device according to Claims 1 and 5, characterized in that said sliding element is selectively controlled by a driving mechanism of the hydraulic, pneumatic or electrical type.

12. A device according to Claims 1, 4 and 8, characterized in that said spreading jaw is provided with its own drive mechanism (8).

13. A device according to Claims 1, 4 and 8, characterized in that the opening and closing cycles of said spreading jaw can be controlled as a function of time.

14. A device according to Claim 1, characterized in that mechanically acting means are provided in the lower funnel volume, which are controlled as a function of the opening and closing cycles of said spreading jaw to block, with the spreading jaws open, the funnel volume for grains falling down, for the duration of the opening period.


**Revendications**

1. Dispositif à individualiser et déposer des matières granuleuses, en particulier des semences, en dirigeant un courant d'air dans une trémie (2), ladite trémie étant prévue à recevoir lesdites matières granuleuses, et la partie inférieure de ladite trémie étant formée par des mâchoires écarteuses sous forme d'une trémie prévues avec des extrémités inférieures où se trouve un passage étant, dans son état non écarté, plus petit que la graine la plus petite, caractérisé en ce qu'un tuyau de passage de l'air (4) est disposé dans ladite trémie afin de diriger ledit courant d'air dans la partie inférieure desdites mâchoires écarteuses (3).

2. Dispositif selon la revendication 1, caractérisé en ce que ledit tuyau de passage de l'air (4) est disposé à être levé et abaissé, ne laissant ouvert, dans son état abaissé, qu'une fente entre l'extrémité dudit tuyau et la paroi de ladite trémie, qui est plus étroite que la graine la plus petite.

3. Dispositif selon la revendication 1, caractérisé en ce que l'extrémité de ladite trémie est pourvue de deux mâchoires écarteuses (3) ne formant qu'un secteur de ladite trémie, dont la largeur excède la largeur de la graine la plus grande.

4. Dispositif selon la revendication 1, caractérisé en ce que seulement une mâchoire étendeuse (3a) est prévue.

5. Dispositif selon les revendications 1 et 4, caractérisé en ce que ladite mâchoire étendeuse (3a) est actionnée par une coulisse (5).

6. Dispositif selon les revendications 1, 4 et 5, caractérisé en ce que ladite coulisse (5) a une configuration fourchue.

7. Dispositif selon les revendications 1, 4, 5 et 6, caractérisé en ce que les fourchons de ladite coulisse sont passés à travers par la section de la paroi de ladite trémie, opposée ladite mâchoire écarteuse (3a).

8. Dispositif selon les revendications 1 et 4, caractérisé en ce que ladite coulisse (5) est disposée de telle façon qu'il y reste une fente entre l'extrémité des fourchons de ladite coulisse et les mâchoires écarteuses, ladite fente étant plus étroite que la graine la plus petite.

9. Dispositif selon les revendications 1 et 5, caractérisé en ce que l'écart entre les fourchons de ladite coulisse est plus petite que la graine la plus petite, et que les fourchons sont guidés dans ladite trémie d'une façon qu'il y reste une fente plus petite que la graine la plus petite entre les fourchons disposés à l'extérieur et la paroi de ladite trémie.

10. Dispositif selon les revendications 1 et 5, caractérisé en ce que ladite coulisse est configurée comme une plaque avec des ajours pour le passage de l'air.

11. Dispositif selon les revendications 1 et 5, caractérisé en ce que ladite coulisse est sélectivement commandée par un mécanisme d'actionnement du type hydraulique, pneumatique ou électrique.

12. Dispositif selon les revendications 1, 4 et 8, caractérisé en ce que ladite mâchoire écarteuse est prévue de son propre mécanisme d'actionnement (8).

13. Dispositif selon les revendications 1, 4 et 8, caractérisé en ce que la commande d'ouverture et fermeture de ladite mâchoire écarteuse peut se réaliser en fonction du temps.

14. Dispositif selon la revendication 1, caractérisé en ce que des moyens à l'action mécanique sont disposés dans le clos inférieur de ladite trémie, lesdits moyens étant actionnés en fonction de l'ouverture et de la fermeture de ladite mâchoire écarteuse, et que lesdits moyens barrent le clos de ladite trémie contre des graines tombantes en bas pour la durée de la période de l'ouverture pendant laquelle ladite mâchoire écarteuse est ouverte.

## Fig. 1a

2

3

10

10

1

3

## Fig. 1b

2

10

3

1

## Fig. 2a

4

2

3

3

9

## Fig. 2b

2

9

3

3

9

1

Fig. 3a

Fig. 3b

Fig. 3c

Fig. 4a

Fig. 4b

Fig. 6

Fig. 5a

Fig. 5b